# EUROPEAN PATENT APPLICATION

(11) **EP 1 215 144 A1**
(43) Date of publication of application: **19.06.2002**
(21) Application number: 00830806.6
(22) Date of filing: 05.12.2000
(51) Int. Cl.: B65G 47/84, B65B 43/46, B31B 1/74

(54) **Device for conveying sealed packages**

(71) Applicant: Tetra Laval Holdings & Finance SA, 1009 Pully (CH)
(72) Inventor: Desogus, Michele, 41100 Modena (IT); Baldini, Claudio, 41015 Nonantola (IT)
(74) Representative: Franzolin, Luigi

(57) **Abstract**

There is described a supporting and conveying device (16) for supporting and conveying packages (3) of pourable food products on a unit (1) for applying opening devices (2) to the packages (3). The supporting and conveying device (16) has a main structure (30) defining a support for a relative package (3) and movable along a transfer path (P); two lateral retaining members (31, 32) carried movably by the main structure (30) and cooperating with opposite lateral walls (8, 9) of the package (3) arranged successively along the transfer path (P); elastic means (33, 34) acting on the retaining members (32, 32) to keep them in a closed position gripping the package (3) on the main structure (30); and actuating means (50, 51) acting on each retaining member (31, 32), at predetermined locations along the transfer path (P) and in opposition to the elastic means (33, 34), to move the retaining member (31, 32) into an open position away from the other retaining member (32, 31).

## Description

The present invention relates to a device for supporting and conveying sealed packages of pourable food products on a unit for applying opening devices to the packages.

As is known, many pourable food products, such as fruit juice, UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing a web of laminated packaging material. The packaging material has a multilayer structure comprising a layer of fibrous material, e.g. paper, covered on both sides with layers of heat-seal plastic material, e.g. polyethylene, and, in the case of aseptic packages for long-storage products, such as UHT milk, also comprises a layer of oxygen-barrier material defined, for example, by an aluminium film, which is superimposed on a layer of heat-seal plastic material and is in turn covered with another layer of heat-seal plastic material eventually defining the inner face of the package contacting the food product.

As is known, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a vertical tube.

The tube is filled with the sterilized or sterile-processed food product, and is sealed and cut at equally spaced cross sections to form pillow packs, which are then folded mechanically to form the finished, e.g. substantially parallelepiped-shaped, packages.

Alternatively, the packaging material may be cut into blanks, which are formed into packages on forming spindles, and the resulting packages are filled with the food product and sealed. One example of such a package is the so-called "gable-top" package commonly known by the trade name Tetra Rex (registered trademark).

The above packages are normally fitted with reclosable opening devices to protect the content of the packages against external agents, and to permit consumption of the food product.

The most commonly used opening devices comprise a frame defining an opening and fitted about a pierceable or removable portion of the top wall of the package; and a cap hinged or screwed to the frame and which can be removed to open the package. Other, e.g. slidable, opening devices are also known to be used.

The pierceable portion of the package may be defined, for example, by a so-called "prelaminated" hole, i.e. a hole formed in the fibrous layer of the packaging material before the fibrous layer is joined to the barrier layer, which thus closes the hole to ensure hermetic, aseptic sealing, while at the same time being easily pierced.

In the case of aseptic packaging machines, the opening devices described are normally fitted continuously straight on to the formed packages.

Known units for applying opening devices substantially comprise a conveyor for feeding the packages successively along a normally straight transfer path; first heating means for locally heating the packages at the pierceable portions; second heating means for heating the opening devices; and actuating means activated selectively along the transfer path to apply the heated opening devices to the hot pierceable portions of the respective packages.

While providing for satisfactory application of the opening devices to the respective packages, known units still leave room for further improvement. In particular a demand exists in the industry for some way of ensuring maximum stability of the packages when heat sealing the respective opening devices, and so improving the quality and precision with which the opening devices are applied.

It is an object of the present invention to provide a device for supporting and conveying sealed packages of pourable food products on a unit of the above type, designed to keep the packages in a stable position when applying the respective opening devices, while at the same time enabling the packages to be fed safely and smoothly, with no shock or slippage, on and off the unit.

According to the present invention, there is provided a supporting and conveying device for supporting and conveying packages of pourable food products on a unit for applying opening devices to the packages, said supporting and conveying device being characterized by comprising a main structure defining a support for a relative said package and movable along a transfer path; two lateral retaining members carried movably by said main structure and cooperating with opposite lateral walls of said package arranged successively along said transfer path; closing means acting on said retaining members to keep them in a closed position gripping said package on said main structure; and actuating means acting on each said retaining member, at predetermined locations along said transfer path, to move the retaining member into an open position away from the other said retaining member.

A preferred, non-limiting embodiment of the present invention will be described by way of example with reference to the accompanying drawings, in which:
Figure 1 shows a top plan view, with parts removed for clarity, of a conveyor assembly of a unit for applying opening devices to sealed packages of pourable food products;
Figure 2 shows a larger-scale view in perspective of a device for supporting and conveying a respective package in accordance with the present invention and forming part of the Figure 1 conveyor assembly.

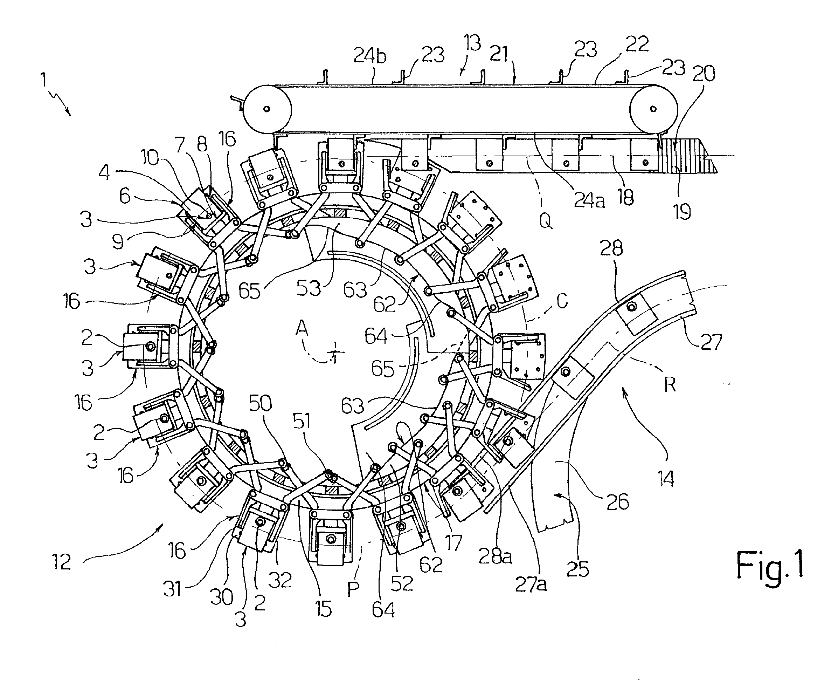

Number 1 in Figure 1 indicates as a whole a unit for applying reclosable, e.g. screw or hinged, opening devices 2 to respective sealed, aseptic, parallelepiped-shaped packages 3 of a pourable food product such as pasteurized or UHT milk, fruit juice, wine, etc.

Unit 1 may be incorporated in a packaging machine (not shown) for continuously producing packages 3 from a tube of packaging material (not shown).

The tube is formed in known manner upstream from unit 1 by longitudinally folding and sealing a known web (not shown) of heat-seal sheet material, which is defined by a layer of fibrous material, e.g. paper, covered, on the side eventually forming the outside of packages 3, with a layer of thermoplastic material, e.g. polyethylene, and, on the side eventually contacting the food product, with a layer of thermoplastic material and a layer of barrier material, e.g. an aluminium sheet, in turn covered with thermoplastic material.

The tube of packaging material is then filled with the food product for packaging, and is sealed and cut at equally spaced cross sections to form pillow packs; the pillow packs are then subjected to a series of mechanical folding operations to form respective parallelepiped-shaped packages 3, which are then fed successively to unit 1 to apply, e.g. heat seal, respective opening devices 2.

Each package 3 is defined by a top wall 4 for receiving respective opening device 2; by an opposite bottom wall (not shown in the accompanying drawings); by a front and rear wall 6, 7; and by two opposite lateral walls 8, 9.

On top wall 4 and adjacent to front wall 6, each package 3 has a circular pierceable portion 10, to which a respective opening device 2 is eventually applied by unit 1, and which is at least partly detachable from top wall 4 using opening device 2 in known manner.

In the example shown, pierceable portion 10 of packages 3 is defined by a so-called "prelaminated" hole, i.e. a hole formed in the fibrous layer of the packaging material before the fibrous layer is joined to the barrier layer, which thus closes the hole to ensure hermetic, aseptic sealing, while at the same time being easily pierced.

Alternatively, opening devices 2 may advantageously be applied by unit 1 to packages other than the type described above, e.g. nonaseptic packages of pourable food products such as pasteurized milk, the packaging material of which is defined by a layer of fibrous material covered on both sides with layers of heat-seal plastic material and having, on a top wall of the package, a pierceable portion defined by a preferential tear line normally defined by a succession of perforations.

Unit 1 substantially comprises a conveyor assembly 12 for feeding packages 3 successively, along a curved transfer path P of axis A, from a supply station 13 to an output station 14; and application means (not shown or described by not forming part of the present invention) activated selectively along path P to continuously heat seal opening devices 2 to pierceable portions 10 of respective packages 3.

Conveyor assembly 12 substantially comprises a cylindrical, annular rotary table 15 of axis A; and a number of identical supporting and conveying devices 16 for supporting and conveying packages 3, and which are fixed to and project from a radially outer surface 17 of table 15, and are equally spaced angularly about axis A.

As table 15 rotates about axis A, supporting and conveying devices 16 are fed along a circular path C coincident, between supply and output stations 13 and 14, with transfer path P of packages 3.

Supply station 13 comprises an elongated straight guide surface 18 defining an extension of a conveying branch 19 of a belt conveyor 20 for supplying packages 3, and extending on one side of conveyor assembly 12, substantially tangent to path P; and an actuating device 21 for pushing packages 3 in a predetermined sequence along guide surface 18.

More specifically, conveying branch 19 of belt conveyor 20 and guide surface 18 together define a feed path Q, along which packages 3 are fed, and which extends tangent to and in the same direction as path P at the point of tangency. Packages 3 are fed to conveyor assembly 12 in a vertical position (Figure 1), i.e. with pierceable portion 10, to which respective opening device 2 is eventually applied, facing upwards.

Actuating device 21 is located on the opposite side of guide surface 18 to the side facing conveyor assembly 12, and comprises a conveyor belt 22, which is looped about two pulleys having respective axes perpendicular to guide surface 18, and supports externally a number of substantially L-shaped paddles 23 equally spaced along belt 22 and each of which pushes the upstream lateral wall 8 of a respective package 3 to feed the package along path Q to conveyor assembly 12.

More specifically, conveyor belt 22 comprises two straight branches 24a, 24b parallel to each other and to path Q, and one (24a) of which extends laterally adjacent to guide surface 18.

Output station 14 comprises an endless, flat, horizontal conveyor belt 25 (shown only partly in Figure 1), a curved portion 26 of which is substantially externally tangent to conveyor assembly 12, and is supplied by conveyor assembly 12 with packages 3 complete with respective opening devices 2.

In the example shown, supply station 13 and output station 14 are spaced from 180° to 270° apart with respect to axis A and in the rotation direction of table 15.

On leaving conveyor assembly 12, packages 3 are guided by two parallel lateral rails 27, 28 defining respective slideways for the front and rear walls 6, 7 of packages 3. Together with conveyor belt 25, rails 27 and 28 define an output path R of packages 3, tangent to and in the same direction as path P at the point of tangency.

More specifically, rails 27, 28 are defined by elongated sections extending along part of the opposite sides of conveyor belt 25 and having respective straight end portions 27a, 28a projecting tangentially from conveyor belt 25 towards conveyor assembly 12 to guide packages 3 out of respective supporting and conveying devices 16. More specifically, end portion 28a of the outermost rail 28, with reference to conveyor belt 25, extends through the supporting and conveying devices 16 traveling through output station 14, so as to assist withdrawal of respective packages 3 from conveyor assembly 12.

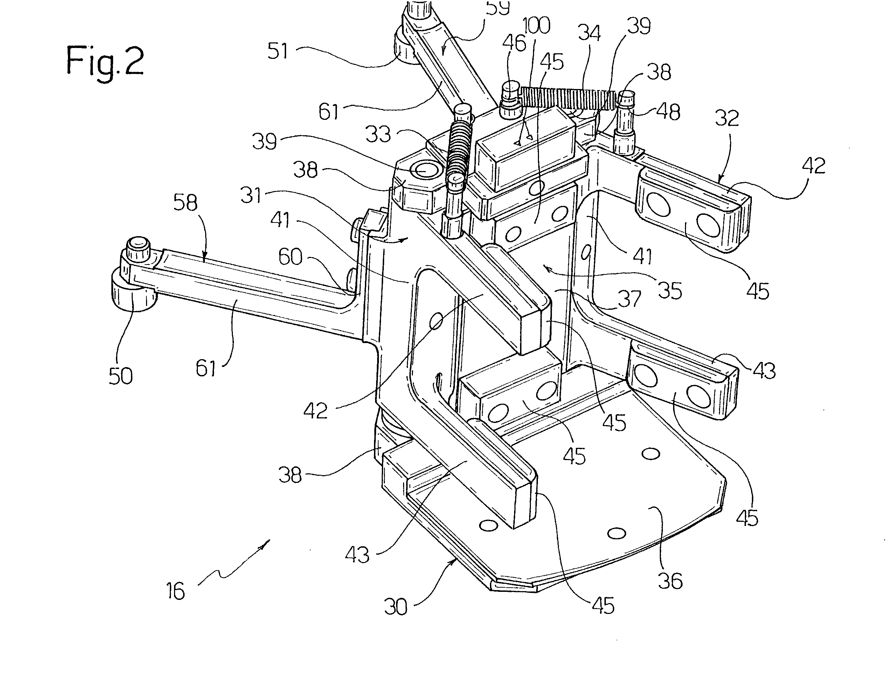

With particular reference to Figure 2, each supporting and conveying device 16 comprises an L-shaped main structure 30 fixed to the radially outer surface 17 of table 15 and defining a support for the bottom wall and rear wall 7 of a respective vertically positioned package 3; two lateral retaining members 31, 32 carried movably by main structure 30 and cooperating respectively, with reference to path P, with the up- and downstream lateral walls 8, 9 of package 3; and two cylindrical helical return springs 33, 34 interposed between main structure 30 and respective retaining members 31, 32, and acting on retaining members 31, 32 to keep them in a closed position gripping respective package 3 on main structure 30.

More specifically, main structure 30 comprises a vertical plate or upright 35 fixed integrally to the radially outer surface 17 of table 15 and for receiving rear wall 7 of a respective package 3; and a horizontal, substantially flat rectangular base 36 projecting perpendicularly from plate 35, defining a support for the bottom wall of package 3, and extending coplanar with guide surface 18 and conveyor belt 25.

Plate 35 comprises a flat, rectangular, intermediate portion 37, from whose opposite edges project laterally respective flat appendixes 38 parallel to base 36.

Each retaining member 31, 32 is hinged to plate 35 about a respective pin 39 extending perpendicularly between the appendixes 38 on the same side of plate 35.

In the closed position, retaining members 31, 32 of each supporting and conveying device 16 are maintained by respective springs 33, 34 in a position substantially perpendicular to plate 35.

Each retaining member 31, 32 is substantially C-shaped and comprises a prismatic vertical bar portion 41 through which respective pin 39 extends longitudinally; and two arms 42, 43 projecting perpendicularly from the top and bottom end respectively of bar portion 41, and which cooperate with a relative lateral wall 8, 9 of the package 3 carried on main structure 30. At output station 14, the gap between arms 42, 43 of each retaining member 31, 32 is penetrated, as table 15 rotates, by end portion 28a of rail 28.

More specifically, each supporting and conveying device 16 also comprises a number of supporting plates 45 made of plastic material, fixed to each arm 42, 43 of retaining members 31, 32 and close to the top and bottom edges of plate 35, and which provide for cushioning and safeguarding respective package 3 against damage by sharp metal edges.

Springs 33, 34 of each supporting and conveying device 16 extend obliquely and diverge between intermediate portion 37 of plate 35 and respective retaining members 31, 32. More specifically, springs 33, 34 extend from one side of relative pins 39, and each have a first end portion 46 fixed to a pin projecting from a top edge of intermediate portion 37 of relative plate 35, and a second end portion 48 fixed to another pin projecting from a top edge of arm 42 of relative retaining member 31, 32.

In the absence of the load defined by packages 3, and when not activated externally, retaining members 31, 32 of each supporting and conveying device 16 are maintained by respective springs 33, 34 in a position perpendicular to relative plate 35 by prismatic bar portions 41 laterally contacting respective opposite lateral edges of intermediate portion 37 of plate 35.

Each supporting and conveying device 16 also comprises optically detectable reference means defined, in the example shown, by two reference marks 100 located on the top edge of intermediate portion 37 of plate 35, and defining a reference system integral with main structure 30 and by which to determine the position of pierceable portion 10 of package 3 on main structure 30. Which information enables the position of each package 3 with respect to the operating head applying respective opening device 2 to be adjusted, e.g. by moving in two perpendicular directions a movable portion of base 36 supporting package 3.

Each supporting and conveying device 16 also comprises two cam follower rollers 50, 51 carried integrally by respective retaining members 31, 32, and which, as table 15 rotates, roll along respective fixed cams 52, 53 extending parallel to path C, close to output and supply stations 14 and 13 respectively.

The interaction of cam 53 and cam follower roller 51 of retaining member 32 of the supporting and conveying device 16 traveling through supply station 13 rotates retaining member 32, about respective pin 39 and in opposition to respective spring 34, into an open position away from retaining member 31 and permitting transfer of a package 3 from guide surface 18 to main structure 30.

In the same way, the interaction of cam 52 and cam follower roller 50 of retaining member 31 of the supporting and conveying device 16 traveling through supply station 14 rotates retaining member 31, about respective pin 39 and in opposition to respective spring 33, into an open position away from retaining member 32 and permitting transfer of a package 3 from conveyor assembly 12 to conveyor belt 25.

By virtue of each spring 33, 34 extending from one side of relative pin 39 and obliquely between relative plate 35 and respective retaining member 31, 32, the load required to overcome the reaction of spring 33, 34 decreases gradually as retaining member 31, 32 is rotated into the open position. That is, as arms 42, 43 of retaining member 31, 32 move gradually into line with the axis of respective spring 33, 34, the reaction force component of the spring in the opposite direction to that in which arms 42, 43 are moved tends to decrease gradually from a maximum value corresponding to the closed position of retaining member 31, 32.

Each cam follower roller 50, 51 is fitted idly to the free end of a respective L-shaped bracket 58, 59 fitted integrally to, at the opposite end, and projecting from bar portion 41 of respective retaining member 31, 32. More specifically, each bracket 58, 59 comprises an anchoring portion 60 fixed to respective bar portion 41; and a straight supporting portion 61, which projects perpendicularly from anchoring portion 60, extends from the opposite side of respective bar portion 41 with respect to relative arms 42, 43, and forms an obtuse angle with arms 42, 43.

Supporting portions 61 of brackets 58, 59 of each supporting and conveying device 16 extend from and are fixed to respective retaining members 31, 32 in vertically offset positions, so that respective cam follower rollers 50, 51 operate in different planes. In the example shown, cam follower rollers 50 integral with retaining members 31 are located lower down than cam follower rollers 51.

Cams 52, 53 are housed successively inside the cavity defined by the radially inner surface of table 15, and are defined by curved, substantially arc-shaped plates, each extending about an angle of approximately ninety degrees.

More specifically, each cam 52, 53 is defined towards axis A by a work edge 62 cooperating with relative cam follower rollers 50, 51 and defined by a circular intermediate portion 63, and by opposite end portions 64, 65 varying gradually in radius with respect to axis A, extending obliquely with respect to intermediate portion 63, and diverging with respect to each other towards the radially inner surface of table 15. With reference to the rotation direction of table 15 and to path P, end portions 64 of work edges 62 of cams 52, 53 are located upstream from respective end portions 65 and decrease gradually in radius with respect to axis A; and conversely, end portions 65 increase gradually in radius with respect to axis A in the rotation direction of table 15.

Cam 52 extends upstream and at output station 14, while cam 53 extends upstream and at supply station 13 and downstream from cam 52.

Operation of unit 1 will be described with reference to one package 3, and as of an initial condition in which package 3 is located at the downstream end of guide surface 18 pending transfer to the adjacent supporting and conveying device 16.

More specifically, package 3 is fed along guide surface 18 in a vertical position, i.e. with pierceable portion 10 facing upwards, and is pushed by a respective paddle 23 of actuating device 21 on to base 36 of the adjacent supporting and conveying device 16. At this stage, transfer of package 3 on to supporting and conveying device 16 is assisted by the downstream retaining member 32, in the direction of path P, being maintained in the open position by cam follower roller 51 of the retaining member interacting with intermediate portion 63 of work edge 62 of cam 53.

As table 15 rotates about axis A, the supporting and conveying device 16 into which package 3 is being transferred is eventually positioned with base 36 along an extension of guide surface 18, so that package 3 is positioned with rear wall 7 contacting plate 35 of supporting and conveying device 16, with supporting plates 45 in between. At the same time, cam follower roller 51 of retaining member 32 rolls along the downstream, increasing-radius end portion 65 of work edge 62 of cam 53, so that retaining member 32 is gradually pulled into the closed position by respective spring 34.

At this point, package 3 is positioned with rear wall 7 resting against plate 35, and is clamped between retaining members 31 and 32, both in the closed position.

Along the next portion of path P, a respective opening device 2 is heat sealed to top wall 4 of package 3 so as to completely cover pierceable portion 10; in the course of which, package 3 is clamped by retaining members 31, 32 in a stable position on main structure 30 of supporting and conveying device 16.

Once the heat-seal operation is completed, further rotation of table 15 causes cam follower roller 50 of retaining member 31 of supporting and conveying device 16 to interact with the upstream, decreasing-radius end portion 64 of work edge 62 of cam 52, so that retaining member 31 is rotated about respective pin 39 into the open position by the time the intermediate portion 63 of work edge 62 of cam 52 is reached.

At this point, as supporting and conveying device 16 travels along path P, end portion 28a of rail 28 is inserted between arms 42, 43 first of retaining member 32 and then of retaining member 31, and is interposed between plate 35 and rear wall 7 of package 3 to guide the package off conveyor assembly 12 and on to conveyor belt 25.

At this stage, the base 36 of supporting and conveying device 16 is substantially externally tangent to curved portion 26 of conveyor belt 25, so that package 3, as table 15 rotates and guided by rails 27 and 28, slides off base 36 on to conveyor belt 25. Rotation of retaining member 31 into the open position provides for easing package 3, smoothly and with substantially no slippage, off conveyor assembly 12.

Once the package is transferred, the interaction of cam follower roller 50 with the downstream, increasing-radius end portion 65 of work edge 62 of cam 52 closes respective retaining member 31.

Before supporting and conveying device 16 reaches supply station 13, retaining member 32 is again moved into the open position by respective cam follower roller 51 interacting with end portion 64 and intermediate portion 63 of work edge 62 of cam 53.

The advantages of supporting and conveying devices 16 according to the present invention will be clear from the foregoing description.

In particular, by virtue of retaining members 31, 32 being loaded by respective springs 33, 34 to grip package 3, the package is maintained in a highly stable position when applying the respective opening device 2.

Moreover, at supply and output stations 13 and 14, the space available on supporting and conveying devices 16 to accommodate respective packages 3 can be increased by alternately moving retaining members 31, 32 into the open position, so that packages 3 are fed on to conveyor assembly 12 and subsequently unloaded off respective supporting and conveying devices 16 smoothly, with no shock or slippage which might damage packages 3.

Finally, the plastic supporting plates 45 on each supporting and conveying device 16 ensure relatively delicate contact between packages 3 and retaining members 31, 32 and plate 35 of main structure 30.

Clearly, changes may be made to supporting and conveying devices 16 as described and illustrated herein without, however, departing from the scope of the accompanying Claims.

## Claims

1. A supporting and conveying device (16) for supporting and conveying packages (3) of pourable food products on a unit (1) for applying opening devices (2) to the packages (3), said supporting and conveying device (16) being **characterized by** comprising a main structure (30) defining a support for a relative said package (3) and movable along a transfer path (P); two lateral retaining members (31, 32) carried movably by said main structure (30) and cooperating with opposite lateral walls (8, 9) of said package (3) arranged successively along said transfer path (P); closing means (33, 34) acting on said retaining members (32, 32) to keep them in a closed position gripping said package (3) on said main structure (30); and actuating means (50, 51) acting on each said retaining member (31, 32), at predetermined locations along said transfer path (P), to move the retaining member (31, 32) into an open position away from the other said retaining member (32, 31).

2. A device as claimed in Claim 1, **characterized in that** said transfer path (P) is a substantially circular path.

3. A device as claimed in Claim 1 or 2, **characterized in that** said main structure (30) is substantially L-shaped and comprises a supporting base (36) for receiving a bottom wall of said package (3); and an upright (35) extending perpendicularly with respect to said base (36) and defining a vertical support for an end wall (7) of said package (3) perpendicular to said lateral walls (8, 9) and to said bottom wall.

4. A device as claimed in Claim 3, **characterized in that** said retaining members (31, 32) are hinged to said main structure (30) about respective pins (39) perpendicular to said base (36).

5. A device as claimed in Claim 4, **characterized in that** said pins (39) are fitted along opposite lateral edges of said upright (35).

6. A device as claimed in Claim 4 or 5, **characterized in that** each said retaining member (31, 32) is substantially C-shaped and comprises a vertical portion (41) hinged about the respective said pin (39); and two arms (42, 43) extending perpendicularly from respective opposite ends of said vertical portion (41).

7. A device as claimed in any one of Claims 3 to 6, **characterized in that** said closing means include elastic means comprising, for each said retaining member (31, 32), a return spring (33, 34) having opposite ends fixed respectively to said upright (35) and to the retaining member (31, 32).

8. A device as claimed in Claim 7, **characterized in that** said springs (33, 34) extend from said upright (35) and diverge with respect to each other towards the respective said retaining members (31, 32).

9. A device as claimed in Claim 7 or 8, **characterized in that** each said spring (33, 34) extends from one side of said pin (39) hinging the respective said retaining member (31, 32), and obliquely with respect to said upright (35) and to said arms (42, 43) of the retaining member (31, 32) in said closed position.

10. A device as claimed in any one of Claims 3 to 9, **characterized by** comprising supporting means (45) made of plastic material, and which are carried by said retaining members (31, 32) and by said upright (35) of said main structure (30), and cooperate in contacting manner with the relative said package (3).

11. A device as claimed in any one of Claims 7 to 10, **characterized in that** said actuating means comprise cam follower means (50, 51) carried by each said retaining member (31, 32) and movable in opposition to said elastic means (33, 34).

12. A device as claimed in Claim 11, **characterized in that** said cam follower means comprise a cam follower roller (50, 51) fitted idly to a bracket (58, 59) projecting from said vertical portion (41) of the relative said retaining member (31, 32), on the opposite side to said arms (42, 43).

13. A device as claimed in any one of the foregoing Claims, **characterized by** comprising optically detectable reference means (100) located on said main structure (30) and defining a reference system integral with the main structure (30) and by which to determine the position of a pierceable portion (10) of the relative said package (3) for receiving a relative said opening device (2).
